# FASCICULE DE BREVET EUROPEEN

(11) **EP 3 612 605 B1**
(45) Date de publication et mention de la délivrance du brevet: **06.09.2023**
(21) Numéro de dépôt: 18720336.9
(22) Date de dépôt: 16.04.2018
(51) Int. Cl.: C09D 11/16, B43K 8/02

(54) **ENCRE EFFACABLE À SEC À TEMPS DE SECHAGE AMELIOREE**
TROCKENLÖSCHTINTE MIT VERBESSERTER TROCKNUNGSZEIT
DRY ERASE INK WITH IMPROVED DRYING TIME

(30) Priorité: 18.04.2017 FR 1753339
(43) Date de publication de la demande: 26.02.2020
(73) Titulaire: Société BIC, 92110 Clichy (FR)
(72) Inventeur: BETHOUART, Carine, 62152 Neufchatel-Hardelot (FR); LEFEBVRE, Philippe, 62930 Wimereux (FR); DEBRAUWER, Christelle, 77860 Saint Germain Sur Morin (FR)
(74) Mandataire: Cabinet Beau de Loménie
(86) Numéro de dépôt international: PCT/FR2018/050952
(87) Numéro de publication internationale: WO 2018/193196

(56) Documents cités:
- DE-A1- 3 044 036
- JP-A- H 069 917

## Description

La présente invention concerne les encres effaçables à sec à base d'acétate d'alkyle pour instrument d'écriture.

Les encres effaçables à sec sont destinées à être utilisées sur des surfaces imperméables, c'est-à-dire non poreuses, telles que des tableaux blancs par exemple de type velleda^{®}. Ce sont dans la majorité des cas des encres pigmentées et de faible viscosité (entre 5 et 10 cP à 20°C) pour une utilisation en particulier dans des marqueurs munis de pointes fibreuses. Elles doivent sécher rapidement car elles sont effaçables par frottement après séchage par exemple à l'aide d'un tissu sec ou d'une brosse.

Une des propriétés importantes de ce type d'encre est donc leur propriété de séchage rapide qui permet à l'utilisateur de pouvoir effacer un tableau blanc rapidement après utilisation (sans laisser de traces), quel que soit le matériau de surface des tableaux blancs : polypropylène, PVC, laquée, émaillée ou mélamine par exemple et même lorsque l'encre est encore humide dans le cas où l'utilisateur a fait une erreur qu'il souhaite immédiatement corriger.

Des encres effaçables à sec à base d'acétate d'alkyle sont disponibles dans le commerce, par exemple sous les dénominations : BIC VELLEDA^{®}, BIC Great Erase BOLD^{®} et BIC Marking^{®} de la société BIC. En général l'acétate d'alkyle utilisé est l'acétate de n-butyle, en particulier en mélange avec la méthyl iso-butyle cétone afin d'améliorer le temps de séchage.

Or les inventeurs se sont aperçus de façon surprenante que l'utilisation d'acétate de propyle (tel que acétate de n-propyle ou acétate d'isopropyle ou leurs mélanges) en tant que solvant principal permettait d'améliorer la propriété de rapidité de séchage de l'encre effaçable à sec sans avoir besoin d'utiliser de la méthyl iso-butyle cétone et ainsi que ses propriétés d'effacement à court terme (c'est à dire même encore humide). En particulier une telle encre contient un ester de pentaérythritol en tant qu'agent de séparation.

La demande FR2212408 divulgue une composition d'encre pour écriture sur des tableaux comprenant une résine, un pigment, un solvant organique volatile et un liquide organique non volatile. Parmi les nombreux solvants organiques volatiles indiqués dans cette demande, les esters sont cités tels que l'acétate d'éthyle, l'acétate de propyle, l'acétate d'isopropyle, l'acétate de butyle, l'acétate d'isobutyle.

Toutefois, aucun des exemples n'utilise les acétates de propyle et d'isopropyle comme solvant. Seul l'acétate de butyle est utilisé dans certains exemples et jamais en tant que solvant unique.

La demande de brevet JP2010-209169 enseigne quant à elle que la propriété d'effacement à long terme d'une encre effaçable à sec peut être améliorée par ajout d'un ester de polyol néopentyl et d'acide gras, l'acide gras étant en C₄₋₂₀, tels que par exemple les esters de pentaérythritol de tétra acide gras, dans les compositions d'encre effaçables à sec à base de solvant organique.

Toutefois ce document recommande l'utilisation comme solvant principal d'un alcool aliphatique inférieure ou d'un éther de glycol.

Les acétates d'alkyles sont cités au milieu d'autres solvants mais uniquement en tant que co-solvant et ne sont pas exemplifiés.

La demande de brevet JP H06009917 décrit également une encre effaçable à sec à base de solvant organique. La liste des solvants appropriés inclut l'acétate de n-propyle et l'acétate d'isopropyle. Toutefois aucun exemple particulier de ce document n'utilise l'un de ces solvants. En outre la liste des solvants appropriés inclut l'acétate de n-butyle (paragraphe [0006]). Or comme il a été démontré par les inventeurs dans la présente demande, grâce aux exemples comparatifs (exemple 1 et exemple comparatif 2), l'acétate de n-propyle permet d'obtenir une encre présentant de meilleurs résultats d'effacement à court terme avec l'encre encore humide pour la majorité des surfaces et un temps de séchage plus court par rapport à une encre contenant de l'acétate de n-butyle.

La demande DE 30 44 036 décrit des compositions d'encre comprenant, en tant que solvant organique principal, l'acétate de propyle. Toutefois il ne s'agit pas d'encres effaçables à sec. En outre ces encres ne contiennent pas un pigment, une résine et un agent de séparation.

Ainsi, aucun des documents de l'art antérieurs ne décrit ni ne suggère que l'utilisation de l'acétate de propyle et d'un ester de pentaérythritol puisse avoir les propriétés découvertes par les inventeurs (vitesse de séchage améliorée, propriété d'effacement à court terme lorsque l'encre est encore humide améliorée). Leur sélection est donc nouvelle et inventive.

La présente invention concerne donc une encre effaçable à sec pour instrument d'écriture comprenant en tant que solvant organique principal un solvant choisi parmi l'acétate de n-propyle, l'acétate d'isopropyle ou leur mélange, ladite encre comprenant en outre un pigment, une résine, un agent de séparation et éventuellement des additifs, caractérisée en ce que l'agent de séparation comprend un ester de pentaérythritol.

Avantageusement, le solvant organique principal est l'acétate de n-propyle.

Au sens de la présente invention, on entend par « encre effaçable à sec », une encre qui peut être effacée à sec sur le support, même après séchage, par simple frottement, sans utilisation d'eau ou autre solvant, par exemple par utilisation d'un chiffon sec.

Au sens de la présente invention on entend par « solvant principal », le solvant présent en plus grande quantité dans la composition d'encre selon l'invention. Avantageusement, il s'agit du seul solvant de l'encre, c'est à dire que l'encre ne comprend pas d'autres solvants ou co-solvants.

De façon avantageuse, la teneur en solvant organique principal de l'encre selon l'invention est comprise entre 40 et 90 %, avantageusement entre 50 et 87%, plus avantageusement entre 60 et 85%, encore plus avantageusement entre 70 et 83%, en particulier entre 75 et 80%, en poids par rapport au poids total de l'encre.

Le pigment permet d'apporter la couleur à l'encre et est choisi parmi les pigments bien connus de l'homme du métier tels que par exemple le Pigment BLUE 15:6 et/ou le Pigment VIOLET 37 qui permettent d'obtenir la couleur bleue.

De façon avantageuse, la teneur en pigment de l'encre selon l'invention est comprise entre 0,5 et 10 %, avantageusement entre 0,7 et 5%, plus avantageusement entre 1 et 4%, en particulier entre 2 et 3%, en poids par rapport au poids total de l'encre.

La résine présente dans l'encre selon l'invention permet d'apporter la viscosité appropriée pour l'écriture et l'adhérence sur la surface d'écriture imperméable. La résine va en outre créer un film avec le pigment après évaporation du solvant.

La résine peut être soluble dans le solvant organique principal. Elle peut être naturelle ou synthétique. La résine peut être une résine vinylique, une résine acrylique, une résine styrène-acrylique, une résine copolymère styrène-acide maléique, une résine copolymère rosine-acide maléique, une résine phénol, une résine cellulosique, une résine cétone, ou un mélange de celles-ci. Avantageusement la résine est une résine vinylique telle qu'un copolymère de chlorure de vinyle, le polyvinyle butyrale, la polyvinyle pyrrolidone, le polyvinyle acétate, le copolymère de vinyle-pyrrolidone et de vinyle acétate ou un mélange de ceux-ci. En particulier la résine est un copolymère de chlorure de vinyle, en particulier avec l'acétate de vinyle, par exemple ayant des proportions en poids de chlorure de vinyle d'environ 85% et d'acétate de vinyle d'environ 15%, en particulier disponible sous la dénomination VINNOL^{®} par la société WACKER, tel que le VINNOL^{®} H 15/50, ou le VINNOL^{®} E 15/45, ou un mélange de ceux-ci.

Dans un mode de réalisation particulier, la teneur en résine de l'encre selon l'invention est comprise entre 0,5 et 15 %, avantageusement entre 1 et 10%, plus avantageusement entre 2 et 7%, en particulier entre 4 et 5%, en poids par rapport au poids total de l'encre.

L'agent de séparation doit être soluble dans le solvant organique mais solubilise peu ou pas la résine pour permettre la séparation entre l'encre sèche et la surface non poreuse ou imperméable ce qui facilite l'effacement de l'encre de cette surface par simple frottement.

De nombreux agents de séparation connus dans l'art antérieur peuvent être utilisés dans le cadre de la présente invention tels que des esters d'acide carboxylique, des diesters d'acide phthalique, des glycols tel que le butyl glycol, le triéthylène glycol ou l'hexylène glycol, de la glycérine, des alcools aliphatiques ayant au moins 4 atomes de carbone tel que le méthoxy butanol, des hydrocarbures aliphatiques ayant plus de 6 atomes de carbones tels que de la paraffine liquide, des éthers monoalkyl polyoxypropylène, des éthers monoalkyl polyoxypropylène polyoxyethylène, ou un mélange de ces composés. Avantageusement l'agent de séparation est un ester d'acide carboxylique, en particulier choisi parmi les esters d'acide gras ayant au moins 4 atomes de carbone, les esters alkyle d'acide carboxylique, les esters monobasique d'acide carboxylique, les diesters d'acide dibasique tels que le diéthylhexyl adipate ou le diisodécyl adipate, les mono ou polyesters d'alcool polyhydroxylé, les triglycérides d'acide gras tels que les triglycérides en C₈-C₁₀ ou les esters de pentaérythritol. De façon avantageuse l'agent de séparation est choisi parmi les esters alkyle d'acide carboxylique, les esters de pentaérythritol et leurs mélanges.

L'ester de pentaérythritol peut être un ester de pentaérythritol de tétra acide gras, en particulier de tétra acide gras en C₄-C₂₀.De façon avantageuse il s'agit d'un ester de formule générale (I) suivante 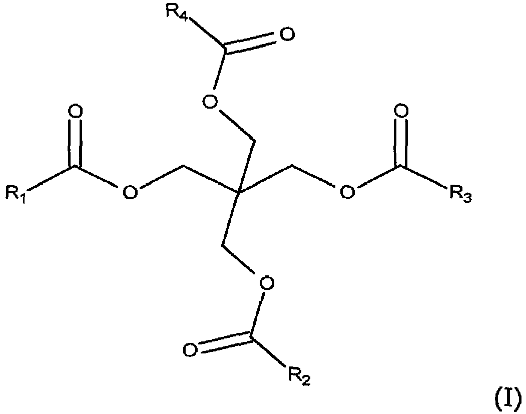 dans laquelle R₁, R₂, R₃ et R₄ représentent indépendamment l'un de l'autre un groupe alkyle en C₄-C₂₀, avantageusement en C₆-C₁₂, encore plus avantageusement en C₈-C₁₀.

On entend au sens de la présente invention par « groupe alkyle en C₄-C₂₀ » tout groupe alkyle saturé linéaire ou ramifié comprenant entre 4 et 20 atomes de carbones. Il s'agit par exemple des groupes butyle, pentyle, hexyle, heptyle éthylhexyle, octyle, décyle, nonyle, undécyle et dodécyle.

En tant qu'ester de pentaérythritol selon l'invention on peut citer par exemple le pentaérythrityl tétraéthylhexanoate, le pentaérythrityl tétracaprylate/tétracaprate, le pentaérythrityl tétracaprylate, le pentaérythrityl tétracaprate et leurs mélanges.

De façon avantageuse, il s'agit du pentaérythrityl tétracaprylate / tétracaprate. Ces esters sont en particulier disponibles commercialement auprès de la société STEARINERIE DUBOIS.

De façon avantageuse, la teneur en ester de pentaérythritol de l'encre selon l'invention et comprise entre 0,5 et 30%, avantageusement entre 1 et 25% en poids, plus avantageusement entre 1,5 et 20%, en particulier entre 2 et 10%, encore plus avantageusement entre 2,5 et 5%, en poids par rapport au poids total de l'encre.

L'utilisation d'un ester de pentaérythritol en tant qu'agent de séparation dans l'encre selon l'invention permet de diminuer la teneur en agent de séparation tout en maintenant de bonnes propriétés d'effacement dans le temps.

L'ester alkyle d'acide carboxylique peut être tel que l'acide carboxylique soit saturé ou insaturé, avantageusement saturé, et ait entre 8 et 20 atomes de carbones, avantageusement entre 6 et 12 atomes de carbones, en particulier entre 8 et 10 atomes de carbones, et que l'alkyle ait entre 2 et 20 atomes de carbones, avantageusement entre 4 et 18 atomes de carbones, plus avantageusement entre 10 et 16 atomes de carbones, encore plus avantageusement entre 14 et 16 atomes de carbone. Il peut s'agir par exemple du cétéaryl éthylhexanoate, du cétyl octanoate, de l'isocétyl octanoate, du stéaryl octanoate, de l'hexyl laurate, de l'isostéaryl laurate, du butyl myristate, de l'isopropyl palmitate, de l'isostéaryl palmitate, de l'isopropyl isostéarate, du butyl isostéarate, de l'hexyl isostéarate, de l'éthyl oléate, du 2-éthylhexyl stéarate ou du décyl oléate.

En particulier il s'agit du cétéaryl éthylhexanoate. Cet ester est en particulier disponible commercialement auprès de la société STEARINERIE DUBOIS.

De façon avantageuse, la teneur en ester alkyle d'acide carboxylique de l'encre selon l'invention et comprise entre 0,5 et 30%, avantageusement entre 1 et 25% en poids, plus avantageusement entre 5 et 20%, en particulier entre 7 et 14%, encore plus avantageusement entre 8 et 12%, en poids par rapport au poids total de l'encre.

De façon avantageuse, l'agent de séparation est un mélange de cétéaryl éthylhexanoate et de pentaérythrityl tétracaprylate / tétracaprate.

De façon avantageuse, la teneur en agent de séparation de l'encre selon l'invention est comprise entre 0,5 et 30%, avantageusement entre 1 et 25% en poids, plus avantageusement entre 5 et 20%, en particulier entre 10 et 15%, plus particulièrement inférieure à 15%, encore plus particulièrement entre 12 et 14%, en poids par rapport au poids total de l'encre.

Dans un mode de réalisation particulièrement avantageux, l'encre selon l'invention ne comprend pas de copolymère bloc polyoxyéthylènepolyoxypropylène.

En effet contrairement à ce qui a été indiqué dans la demande EP0551913, la présence d'un tel copolymère n'est pas nécessaire dans l'encre selon l'invention pour obtenir de bonnes propriétés d'effacement.

Dans un autre mode de réalisation particulièrement avantageux, l'encre selon l'invention ne comprend pas d'ester d'acide phosphorique d'éther de phényle polyoxyéthylène alkylène.

En effet contrairement à ce qui a été indiqué dans la demande JPH0428777, la présence de cet ester n'est pas nécessaire dans l'encre selon l'invention pour obtenir de bonnes propriétés d'effacement.

Dans un autre mode de réalisation particulièrement avantageux, l'encre selon l'invention ne comprend pas de glycérol et/ou de glycol tels que le triéthylène glycol.

L'encre effaçable à sec selon l'invention peut comprendre en outre des additifs tels que des tensioactifs (par exemple de type anionique, cationique ou non ionique tel que du laureth-3, de l'alcool éthoxylate phosphaté ou leurs mélanges), des additifs de fabrication (par exemple de type ester tel que des triglycérides, en particulier en C7, C8 et/ou C10), des agents retardateurs de séchage de la pointe du marqueur (par exemple de type ester ou paraffines tel que du sorbitan stéarate) et leurs mélanges. En particulier il s'agit d'un mélange de tensioactifs et d'agents retardateurs de séchage de la pointe du marqueur. Avantageusement, la teneur en additif de l'encre selon l'invention est comprise entre 0,1 et 10 %, plus avantageusement entre 0,5 et 5%, encore plus avantageusement entre 0,7 et 3%, en particulier entre 1 et 2%, en poids par rapport au poids total de l'encre.

L'encre effaçable à sec selon l'invention est donc destinée à un instrument d'écriture, tel que par exemple un stylo ou un marqueur, avantageusement il s'agit d'un marqueur, en particulier à pointe fibreuse. Le marqueur peut par exemple avoir une pointe en ogive ou une pointe en biseau.

L'encre effaçable à sec selon l'invention est destinée à être utilisée sur une surface non poreuse, en particulier lisse, tel que par exemple un tableau d'écriture blanc. Ce tableau d'écriture peut avoir une surface de composition différente. Il peut s'agir d'un tableau émaillé, d'un tableau laqué, d'un tableau recouvert d'un film de polypropylène, d'un tableau recouvert d'un film de PVC ou d'un tableau recouvert de mélamine.

La présente invention concerne en outre un instrument d'écriture, comprenant une encre effaçable à sec selon la présente invention.

Avantageusement l'instrument d'écriture est un stylo ou un marqueur, en particulier un marqueur, plus particulièrement à pointe fibreuse.

Le marqueur peut par exemple avoir une pointe en ogive ou une pointe en biseau.

La présente invention sera mieux comprise à la lecture de l'exemple qui suit qui est donné à titre indicatif non limitatif.

### Exemple 1 :

Le temps de séchage et les propriétés d'effacement à court et à long terme (humide ou sec) sont testés pour trois compositions différentes d'encre effaçable à sec : une composition d'encre selon l'invention comprenant comme solvant du n-propyl acétate (exemple 1), une composition comparative d'encre contenant comme solvant un mélange d'acétate de n-butyle et de méthyl iso-butyle cétone (exemple comparatif 1) qui correspond à une encre commercialisée et une composition comparative d'encre contenant comme solvant de l'acétate de n-butyle (exemple comparatif 2). La composition de ces trois encres bleues est indiquée dans le tableau 1 ci-dessous.

**Tableau 1 : composition des encres en % en poids.**

| | **Exemple 1** | **Exemple comparatif 1** | **Exemple comparatif 2** |
|---|---|---|---|
| N-PROPYL ACETATE | 78,40 | | |
| N-BUTYL ACETATE | | 61,22 | 78,40 |
| METHYL ISO-BUTYLE CETONE | | 15,05 | |
| PIGMENT BLUE 15:6 | 2,40 | 2,49 | 2,40 |
| VINYLE CHLORIDE COPOLYMER | 4,90 | 5,26 | 4,90 |
| SORBITAN STEARATE | 1,00 | 0,70 | 1,00 |
| CETEARYL ETHYLHEXANOATE | 10,00 | | 10,00 |
| PENTAERYTHRITYL TETRACAPRYLATE/TETRACAPRATE (PE C8/C10) | 3,00 | | 3,00 |
| 2-ETHYLHEXYL STEARATE | | 13,56 | |
| BUTYL GLYCOL | | 0,85 | |
| METHOXY BUTANOL | | 0,39 | |
| HEXYLENE GLYCOL | | 0,20 | |
| PHOSPHATED ALCOHOL ETHOXYLATE | 0,20 | | 0,20 |
| LAURETH-3 | 0,10 | | 0,10 |
| ALKYL POLYGLYCOL ETHER PHOSPHATE, ACID | | 0,28 | |
| **TOTAL** | 100,00 | 100,00 | 100,00 |

Le descriptif du test mis en oeuvre pour comparer le temps de séchage des deux encres est le suivant :
Ce test évalue le temps nécessaire au séchage de l'encre effaçable à sec après dépôt sur une surface non poreuse (tableau blanc).

Le test est réalisé dans une pièce avec air conditionné et humidité contrôlée : 23°C (+/- 2°C) / 50% d'Humidité Relative (+/- 5%)

Le test est réalisé sur une ardoise Velleda^{®} (film en polypropylène).

Avant de démarrer le test, il faut nettoyer le support avec de l'éthanol et le laisser sécher pendant 5 minutes, se laver les mains puis les sécher.

La procédure consiste à tracer (en moins d'une seconde) un trait de 25 cm de long sur le support en démarrant un chronomètre au début du tracé. Le marquage est essuyé avec un doigt perpendiculairement au trait après 2, 4, 6, 8, 10, ... secondes. Le test est terminé lorsque le trait s'efface sans entraîner d'encre.

Le temps de séchage est le temps minimum pour que l'essuyage n'entraîne plus d'encre.

A noter que pour les articles avec une pointe biseautée, il faut réaliser le test avec le plat de la pointe et l'extrémité de la pointe.

Les résultats sur le temps de séchage sont rassemblés dans le tableau 2 ci-dessous.

**Tableau 2 : temps de séchage des encres en secondes**

| **Type de marqueur** | **Type de tableau** | **Exemple comparatif 1** | **Exemple comparatif 2** | **Exemple 1** |
|---|---|---|---|---|
| Feutre avec pointe ogive moyenne - largeur de trait : 1,4 mm | Ardoise Velleda^{®} (film polypropylène) | 6 | 8 | 2 |
| Feutre avec pointe biseau - largeur de trait 3,4-5,5 mm | Ardoise Velleda^{®} (film polypropylène) | 6 s (extrémité de la pointe) | 6 s (extrémité de la pointe) | 2 s (extrémité de la pointe) |
| | | 10 s (plat de la pointe) | 12 s (plat de la pointe) | 4 s (plat de la pointe) |

Ces résultats montrent que, quel que soit l'instrument d'écriture utilisé et donc la forme de la pointe, le temps de séchage est au moins divisé par 2 entre l'encre selon l'invention et l'encre de l'art antérieur ou l'encre à base d'acétate de n-butyle.

Le descriptif des tests mis en oeuvre pour comparer l'effaçabilité à T0 et dans le temps entre les encres est le suivant:
Les tests sont réalisés sur différentes surfaces:
- une ardoise Velleda^{®} (film en polypropylène)
- un film PVC
- un tableau blanc avec surface mélaminée acheté sur le marché européen
- un tableau blanc avec surface mélaminée provenant des USA
- un tableau blanc avec surface laquée (acheté sur le marché européen)
- un tableau blanc avec surface émaillée (acheté sur le marché européen)

### EFFACABILITE A T0 :

Ce test évalue l'effaçabilité d'un dépôt d'encre lorsqu'il est encore humide et lorsqu'il est sec, ainsi que l'incidence de l'effacement sur le support.

Le test est réalisé dans une pièce avec air conditionné et humidité contrôlée : 23°C (+/- 2°C) / 50% d'Humidité Relative (+/- 5%)

Avant de démarrer les tests, il faut nettoyer les différents supports avec de l'éthanol, les laisser sécher pendant 5 minutes, se laver les mains puis les sécher.

Trois tests sont réalisés :
- Effaçabilité du tracé humide (avant tissu) : ce test permet de vérifier que l'effacement est propre quand le consommateur fait une erreur par exemple et veut effacer tout de suite son marquage sans attendre le temps de séchage du film sur le support.

La procédure consiste à faire, sur chacune des surfaces à tester, un frottis de dimensions 20 x 80mm et à essuyer immédiatement le frottis avec 2 doigts dans un mouvement circulaire jusqu'à disparition complète du frottis.

Cette étape est répétée 5 fois de suite aussi rapidement que possible et en faisant le frottis exactement au même endroit (sans nettoyer le support entre les essuyages) et un score est attribué en fonction de ce qui reste visible sur le support selon une échelle indiquée dans le tableau 3 ci-dessous allant de 0 à 10.

**Tableau 3 : score en fonction de l'observation**

| **Observation** | Pas de trace | Légère Trace | Trace moyenne | Trace importante | Trace très importante |
|---|---|---|---|---|---|
| **Score** | 10 | 7,5 | 5 | 2,5 | 0 |

### -Effaçabilité du tracé humide (après tissu) :

S'il reste une trace, le support est essuyé avec du papier absorbant (à 3 reprises au maximum) et un score est également attribué en fonction de ce qui reste visible sur le support avec la même échelle ci-dessus allant de 0 à 10 du tableau 3.

### -Effaçabilité du tracé sec : usage habituel du consommateur

La procédure consiste à faire, sur chacune des surfaces à tester, un frottis de dimensions 20 x 80mm et à le laisser sécher pendant 5 minutes. Le frottis est ensuite essuyé avec un papier absorbant dans un mouvement de va-et-vient jusqu'à disparition complète du frottis.

Ceci est répété 3 fois de suite en faisant le frottis exactement au même endroit (sans nettoyer le support entre les essuyages) et un score est attribué en fonction de ce qui reste visible sur le support avec la même échelle ci-dessus 0 à 10 du tableau 3

### EFFACABILITE DANS LE TEMPS :

Ce test évalue au bout de combien de temps un dépôt d'encre effaçable à sec adhère sur une surface donnée et ne peut donc plus être effacé. Le test est réalisé dans une pièce avec air conditionné et humidité contrôlée : 23°C (+/-2°C) / 50% d'Humidité Relative (+/- 5%)

Avant de démarrer les tests, il faut nettoyer les différents supports avec de l'éthanol, les laisser sécher pendant 5 minutes.

La procédure consiste à faire verticalement, sur chacune des surfaces à tester, autant de frottis (de dimensions 10 x 10mm) que d'intervalles de vieillissement souhaités. Après chaque intervalle de vieillissement et pour chaque support, le frottis est essuyé avec un papier absorbant propre dans un mouvement allerretour fluide et rapide sans appuyer trop fort.

Le test est stoppé dès que l'encre adhère au support ou dès que l'encre ne s'efface plus du tout.

Dans la procédure standard, ce test est réalisé jusqu'à 3 mois.

Le résultat d'effacement, exprimé en temps, correspond à l'intervalle de vieillissement précédant l'adhérence de l'encre ou le non-effacement de l'encre. Les résultats obtenus avec les différentes encres sont présentés dans le tableau 4 ci-dessous.

**Tableau 4 : Résultats des tests d'effacement**

| **Tests** | **Surface** | **Ex Comp 1** | | | **Ex Comp 2** | | | **Ex 1** | | |
|---|---|---|---|---|---|---|---|---|---|---|
| | | Tracé humide avant tissu | Tracé humide après tissu | Tracé sec | Tracé humide avant tissu | Tracé humide après tissu | Tracé sec | Tracé humide avant tissu | Tracé humide après tissu | Tracé sec |
| Effaçabilité à T0 (score) | Velleda^{®} | 5 | 10 | 10 | 5 | 10 | 10 | 5 | 10 | 10 |
| | Film PVC | 7,5 | 10 | 10 | 5 | 10 | 10 | 7,5 | 10 | 10 |
| | Mélamine (EU) | 5 | 10 | 10 | 5 | 10 | 10 | 7,5 | 10 | 10 |
| | Mélamine (USA) | 7,5 | 10 | 10 | 5 | 10 | 10 | 7,5 | 10 | 10 |
| | Laquée | 2,5 | 10 | 10 | 0 | 10 | 10 | 7,5 | 10 | 10 |
| | Emaillée | 2,5 | 10 | 10 | 0 | 10 | 10 | 5 | 10 | 10 |
| Effaçabilité dans le temps (en temps) | Velleda^{®} | Entre 2 et 3 mois | | | Entre 2 et 3 mois | | | Entre 2 et 3 mois | | |
| | Film PVC | 3 mois OK | | | 3 mois OK | | | 3 mois OK | | |
| | Mélamine (EU) | 3 mois OK | | | 3 mois OK | | | 3 mois OK | | |
| | Mélamine (USA) | 3 mois OK | | | 3 mois OK | | | 3 mois OK | | |
| | Laquée | 3 mois OK | | | 3 mois OK | | | 3 mois OK | | |
| | Emaillée | 3 mois OK | | | 3 mois OK | | | 3 mois OK | | |

Les résultats d'effacement à court terme avec l'encre encore humide sont meilleurs pour la majorité des surfaces avec l'encre selon l'invention par rapport aux essais comparatifs 1 et 2.

Les résultats d'effacement à long terme sont identiques entre les trois encres et sont bons.

## Revendications

1. Encre effaçable à sec pour instrument d'écriture comprenant en tant que solvant organique principal un solvant choisi parmi l'acétate de n-propyle, l'acétate d'isopropyle ou leur mélange, ladite encre comprenant en outre un pigment, une résine, un agent de séparation et éventuellement des additifs, **caractérisée en ce que** l'agent de séparation comprend un ester de pentaérythritol.

2. Encre effaçable à sec selon la revendication 1, **caractérisée en ce que** solvant organique principal est l'acétate de n-propyle.

3. Encre effaçable à sec selon l'une quelconque des revendications 1 ou 2, **caractérisée en ce que** le solvant organique principal est le seul solvant de la composition.

4. Encre effaçable à sec selon l'une quelconque des revendications 1 à 3, **caractérisée en ce que** sa teneur en solvant organique principal est comprise entre 40 et 90 %, avantageusement entre 75 et 80% en poids par rapport au poids total de l'encre.

5. Encre effaçable à sec selon l'une quelconque des revendications 1 à 4, **caractérisée en ce que** l'additif est choisi parmi les tensioactifs, les agents retardateurs de séchage de la pointe du marqueur, des additifs de fabrication et leurs mélanges, avantageusement il s'agit d'un mélange de tensioactifs et d'agents retardateurs de séchage de la pointe du marqueur.

6. Encre effaçable à sec selon l'une quelconque des revendications 1 à 5, **caractérisée en ce que** sa teneur en pigment est comprise entre 0,5 et 10%, avantageusement entre 2 et 3% en poids par rapport au poids total de l'encre.

7. Encre effaçable à sec selon l'une quelconque des revendications 1 à 6, **caractérisée en ce que** sa teneur en résine est comprise entre 0,5 et 15 %, avantageusement entre 4 et 5% en poids par rapport au poids total de l'encre.

8. Encre effaçable à sec selon l'une quelconque des revendications 1 à 7, **caractérisée en ce que** sa teneur en agent de séparation est comprise entre 0,5 et 30 %, avantageusement entre 10 et 15% en poids par rapport au poids total de l'encre.

9. Encre effaçable à sec selon l'une quelconque des revendications 1 à 8, **caractérisée en ce que** sa teneur en additif est comprise entre 0,1 et 10%, avantageusement entre 1 et 2% en poids par rapport au poids total de l'encre.

10. Encre effaçable à sec selon l'une quelconque des revendications 1 à 9, **caractérisée en ce qu'**elle est destinée à un marqueur, en particulier à pointe fibreuse.

11. Encre effaçable à sec selon l'une quelconque des revendications 1 à 10, **caractérisée en ce qu'**elle est destinée à être utilisée sur une surface non poreuse, en particulier lisse, tel que par exemple un tableau d'écriture blanc.

12. Instrument d'écriture, comprenant une encre effaçable à sec selon l'une quelconque des revendications 1 à 11, avantageusement l'instrument d'écriture est un marqueur, en particulier à pointe fibreuse.

## Patentansprüche

1. Trockenlöschbare Tinte für ein Schreibinstrument, umfassend als organisches Hauptlösungsmittel ein Lösungsmittel, das aus n-Propylacetat, Isopropylacetat oder Mischungen davon ausgewählt ist, die Tinte umfassend ferner ein Pigment, ein Harz, ein Trennmittel und optional Additive,
**dadurch gekennzeichnet, dass** das Trennmittel einen Pentaerythritester umfasst.

2. Trockenlöschbare Tinte nach Anspruch 1, **dadurch gekennzeichnet, dass** das organische Hauptlösungsmittel n-Propylacetat ist.

3. Trockenlöschbare Tinte nach einem der Ansprüche 1 oder 2,
**dadurch gekennzeichnet, dass** das organische Hauptlösungsmittel das einzige Lösungsmittel der Zusammensetzung ist.

4. Trockenlöschbare Tinte nach einem der Ansprüche 1 bis 3,
**dadurch gekennzeichnet, dass** ihr Gehalt an organischem Hauptlösungsmittel zwischen 40 und 90 Gew.-%, vorzugsweise zwischen 75 und 80 Gew.-%, bezogen auf das Gesamtgewicht der Tinte, beträgt.

5. Trockenlöschbare Tinte nach einem der Ansprüche 1 bis 4,
**dadurch gekennzeichnet, dass** das Additiv ausgewählt ist aus Tensiden, Mitteln zum Verzögern eines Trocknens der Spitze des Markers, Herstellungsadditiven und Mischungen davon, wobei es sich vorzugsweise um eine Mischung aus Tensiden und Mitteln zum Verzögern des Trocknens der Spitze des Markers handelt.

6. Trockenlöschbare Tinte nach einem der Ansprüche 1 bis 5,
**dadurch gekennzeichnet, dass** ihr Pigmentgehalt zwischen 0,5 und 10 Gew.-%, vorzugsweise zwischen 2 und 3 Gew.-%, bezogen auf das Gesamtgewicht der Tinte, beträgt.

7. Trockenlöschbare Tinte nach einem der Ansprüche 1 bis 6,
**dadurch gekennzeichnet, dass** ihr Harzgehalt zwischen 0,5 und 15 Gew.-%,
vorzugsweise zwischen 4 und 5 Gew.-%, bezogen auf das Gesamtgewicht der Tinte, beträgt.

8. Trockenlöschbare Tinte nach einem der Ansprüche 1 bis 7,
**dadurch gekennzeichnet, dass** ihr Trennmittelgehalt zwischen 0,5 und 30 Gew.-%, vorzugsweise zwischen 10 und 15 Gew.-%, bezogen auf das Gesamtgewicht der Tinte, beträgt.

9. Trockenlöschbare Tinte nach einem der Ansprüche 1 bis 8,
**dadurch gekennzeichnet, dass** ihr Additivgehalt zwischen 0,1 und 10 Gew.-%, vorzugsweise zwischen 1 und 2 Gew.-%, bezogen auf das Gesamtgewicht der Tinte, beträgt.

10. Trockenlöschbare Tinte nach einem der Ansprüche 1 bis 9,
**dadurch gekennzeichnet, dass** sie für einen Marker, insbesondere mit Faserspitze, bestimmt ist.

11. Trockenlöschbare Tinte nach einem der Ansprüche 1 bis 10,
**dadurch gekennzeichnet, dass** sie dafür bestimmt ist, auf einer nicht porösen, insbesondere glatten, Oberfläche, wie zum Beispiel einer weißen Schreibtafel, verwendet zu werden.

12. Schreibinstrument, umfassend eine trockenlöschbare Tinte nach einem der Ansprüche 1 bis 11, wobei das Schreibinstrument vorzugsweise ein Marker, insbesondere mit Faserspitze, ist.

## Claims

1. Dry erase ink for a writing instrument, comprising, as the main organic solvent, a solvent selected from n-propyl acetate, isopropyl acetate or a mixture thereof, said ink further comprising a pigment, a resin, a separation agent and optionally additives, **characterized in that** the separation agent comprises a pentaerythritol ester.

2. Dry erase ink according to claim 1, **characterized in that** the main organic solvent is n-propyl acetate.

3. Dry erase ink according to either of claims 1 and 2, **characterized in that** the main organic solvent is the only solvent of the composition.

4. Dry erase ink according to any of claims 1 to 3, **characterized in that** its content of main organic solvent is between 40 and 90 wt.%, advantageously between 75 and 80 wt.%, based on the total weight of the ink.

5. Dry erase ink according to any of claims 1 to 4, **characterized in that** the additive is selected from surfactants, retardants for drying the tip of the marker, manufacturing additives and mixtures thereof, advantageously this is a mixture of surfactants and retardants for drying the tip of the marker.

6. Dry erase ink according to any of claims 1 to 5, **characterized in that** its content of pigment is between 0.5 and 10 wt.%, advantageously between 2 and 3 wt.%, based on the total weight of the ink.

7. Dry erase ink according to any of claims 1 to 6, **characterized in that** its content of resin is between 0.5 and 15 wt.%, advantageously between 4 and 5 wt.%, based on the total weight of the ink.

8. Dry erase ink according to any of claims 1 to 7, **characterized in that** its content of separation agent is between 0.5 and 30 wt.%, advantageously between 10 and 15 wt.%, based on the total weight of the ink.

9. Dry erase ink according to any of claims 1 to 8, **characterized in that** its content of additive is between 0.1 and 10 wt.%, advantageously between 1 and 2 wt.%, based on the total weight of the ink.

10. Dry erase ink according to any of claims 1 to 9, **characterized in that** it is intended for use in a marker, in particular one having a fibrous tip.

11. Dry erase ink according to any of claims 1 to 10, **characterized in that** it is intended for use on a non-porous surface, in particular a smooth surface, such as a whiteboard.

12. Writing instrument comprising a dry erase ink according to any of claims 1 to 11, advantageously the writing instrument is a marker, in particular one having a fibrous tip.
